# EUROPEAN PATENT SPECIFICATION

(11) **EP 0 495 515 B1**
(45) Date of publication and mention of the grant of the patent: **12.04.1995**
(21) Application number: 92100752.2
(22) Date of filing: 17.01.1992
(51) Int. Cl.: B66B 1/34, B66B 3/02, H04L 12/40

(54) **Method of assigning message identifiers in the data transmission network of an elevator system**
Verfahren zur Zuteilung von Nachrichtenkennungen im Datenübertragungsnetzwerk eines Aufzugsystems
Procédé d'attribution des identificateurs de message pour le réseau de communication d'une installation d'ascenseur

(30) Priority: 17.01.1991 FI 910260
(43) Date of publication of application: 22.07.1992
(73) Proprietor: KONE Elevator GmbH, 6340 Baar (CH)
(72) Inventor: Lamberg, Lauri, SF-05830 Hyvinkää (FI)
(74) Representative: Zipse + Habersack

(56) References cited:
- EP-A- 0 182 417
- GB-A- 2 172 779
- US-A- 4 587 511
- US-A- 4 683 989

## Description

The present invention relates to a method of assigning message identifiers in the data transmission network of an elevator system, as defined in the introductory part of claim 1.

The data transmission network of an elevator system consists of a bus, a controlling computer and actuators connected to it, such as the call buttons at the landings and the floor call buttons in the elevator cars, the door motor control etc., which constitute the nodes of the network. In CAN (Controller Area Network) networks, whose speed characteristics make them well suited for use in elevator systems, a message identifier is used by the transmitting node when transmitting a message, whereas in ordinary local networks a node identifier (in CAN networks a message identifier) is used for the selection of the messages to be received.

US-A 4 587 511 discloses a network for an elevator system wherein the message identifiers are set by means of separate setting switches provided in the nodes, a fixed message identifier is programmed for each node separately or the identifiers are set at each node by using a separate tool. The use of setting switches makes the node more expensive and more difficult to install. When fixedly programmed identifiers are used, each node is a unit of individual characteristics. This makes them difficult to produce, and in some cases it may be difficult to obtain spare parts for them. The use of a separate tool requires time and availability of the tool in question but it does not remove the risk of incorrect settings.

GB-A 2 172 779 discloses a multipurpose local area network wherein data is transfered between a plurality of data processing resources coupled to a common cable for data transmission and reception. A new data resource coupled to the cable dynamically assigns itself a unique address on the cable generated from a random number within an predetermined range. The new member transmits an enquiry signal to the new address to determine whether the new address code is currently being used by another agent or not. If an acknowledge signal is received by the new agent in response to the enquiry signal another random number is generated as new address code. The enquiry procedure is repeated with the new address code. However this known procedure involves the drawback that when the predetermined range of possible address codes is small and the number of nodes is very high one address code already selected in an enquiry procedure may be selected again as possible new address code. In this case a longer time may be needed for selecting a suitable address code.

The object of the present invention is to eliminate the drawbacks of the prior-art solutions. In the method of the invention, according to claim 1, a node selects one of the available message identifiers without requiring separate setting.

The method of the invention makes it possible to avoid setting errors made in connection with installation. Moreover, it provides a simpler method of installing the nodes. Also, the nodes themselves are cheaper because e.g. no separate switches for the setting of message identifiers are needed.

Furthermore, producing nodes designed for the same function is easier because they are fully identical, including the software. The procedure also allows the detection of wrong or identical floor number settings. Similarly, the procedure allows the installation of fully identical nodes (e.g. landing call buttons) in the same network.

In the following, the invention is described in detail by the aid of an example by referring to the attached drawings, in which
Fig. 1 presents the data transmission network of an elevator system.
Fig. 2 presents the connections of a node with the network.
Fig. 3 illustrates the selection of an identifier.
Fig. 4 presents the linkages in the selection process.
Fig. 5 presents a diagram representing the selection process.
Fig. 6 presents the linkages in the confirmation process.
Fig. 7 presents a diagram representing the confirmation process.

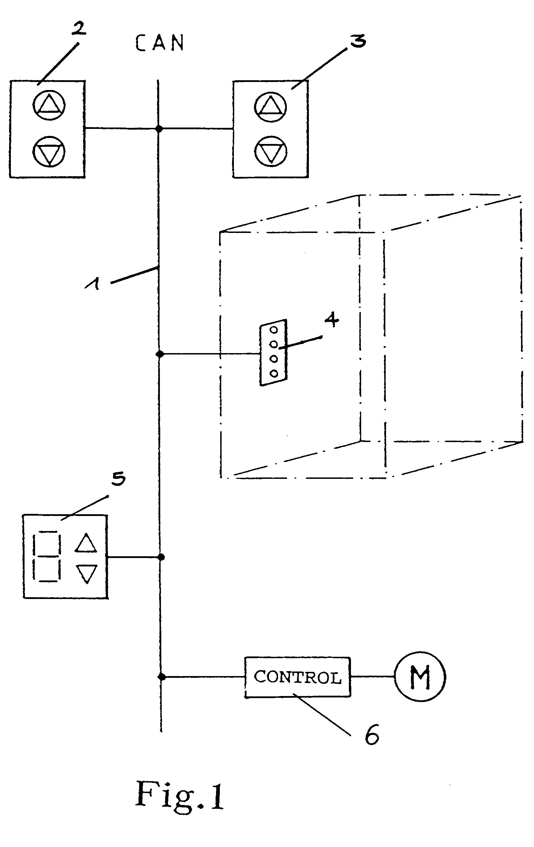

Fig. 1 is a simplified representation of a CAN data transmission network in an elevator system. In addition to the bus 1 and the controlling computer (not shown), the nodes of the network consist of call buttons 2, 3 placed at the same level, the floor call buttons 4 in the elevator car, a floor and direction indicator 5 and a door motor (M) control unit. Naturally, e.g. landing call buttons are needed for each floor, so their number is considerably larger than that shown in Fig. 1.

In the procedure of the invention, each node 2 - 6 connected to the network monitors all the transmissions in the network and records all the messages it detects. The node selects for itself a message identifier among those it does not see in the network, making use of a random number obtained as explained later on e.g. from a free-running counter. Having selected an identifier for itself the node sends a proposal into the network, adding the random number to the message. The random number is added to the message in order to make sure that, if another node happens to select the same message identifier and send its proposal simultaneously into the network, the messages will collide, because in a CAN network a collision of two identical messages transmitted simultaneously will not be detected.

If the message was transmitted without a collision, the transmitting node will wait for a certain minimum time plus a random delay, during which time all the other nodes can reply if they have selected the same identifier before. If the node receives from the network a reply to the effect that the identifier cannot be accepted, or if a collision occurs during the transmission, then the selection process is started again and the identifier used in the previous attempt is recorded as being used or proposed by another node, depending on the reply. In the case of a collision the state is "in use", in other cases as indicated by the reply message.

There are three levels of proposal messages ("I propose", "in use", and "I am using"), and each node sends an "I don't accept" message if the message received from the network is of a lower level or the same level as the node's own message. "In use" means that the node intends to use the identifier in question.

Normal operation of a node is started after the node has succeeded in sending a message of the "I am using" level into the network and the message has been accepted by the other nodes. During normal operation, the node monitors the transmissions in the network as far its own message identifier is concerned, and, if it finds that another node is trying to use the same identifier, it sends an "I don't accept" message containing the state of its own identifier.

In start-up situations some message identifiers may remain in the "I propose" or "in use" state of another node. For this reason there must be an arrangement for returning such message identifiers to the free state to ensure that, even when nearly all the identifiers are already in use, a free identifier might still be found somewhere. This can be achieved e.g. by an arrangement whereby, if the identifier has one of the states referred to, the counter associated with that state is decreased until it returns to the free state.

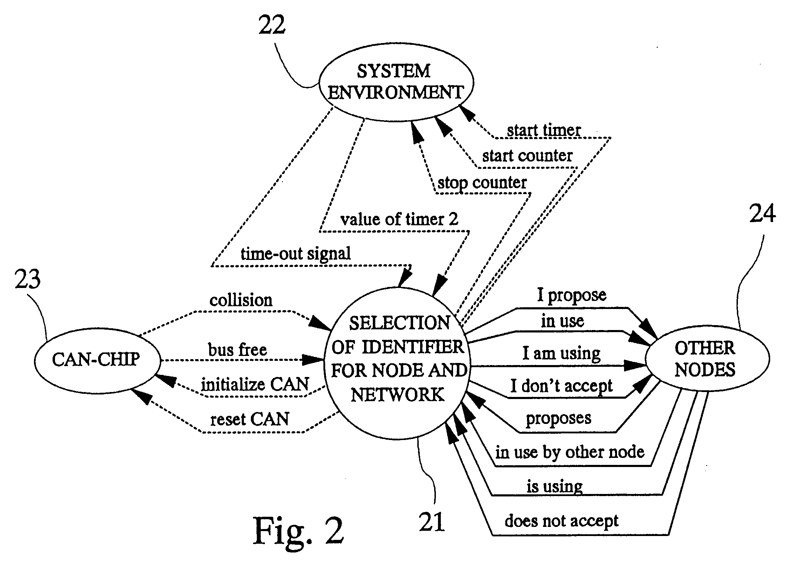

Fig. 2 presents the node software of the invention in the form of a SA-diagram, whose operation is described below. Between the block 21 representing the selection of a node and network identifier and the system environment block 22, the figure shows the value of timer2''as an arrow pointing from the system environment towards the selection, and the time-out signal as a broken-line arrow. In addition, Fig. 2 shows broken-line arrows "stop timer", "start timer" and start "timer2''" pointing from the selection towards the system environment. Pointing from the CAN chip 23 towards the selection are broken-line arrows "collision" and "bus free" and in the opposite direction the arrow "initialize CAN" and the broken-line arrow "reset CAN". Pointing from the selection to the other nodes 24 are arrows representing the three proposal message levels referred to above and the "I don't accept" message, and the corresponding messages as transmitted in the opposite direction from the other nodes

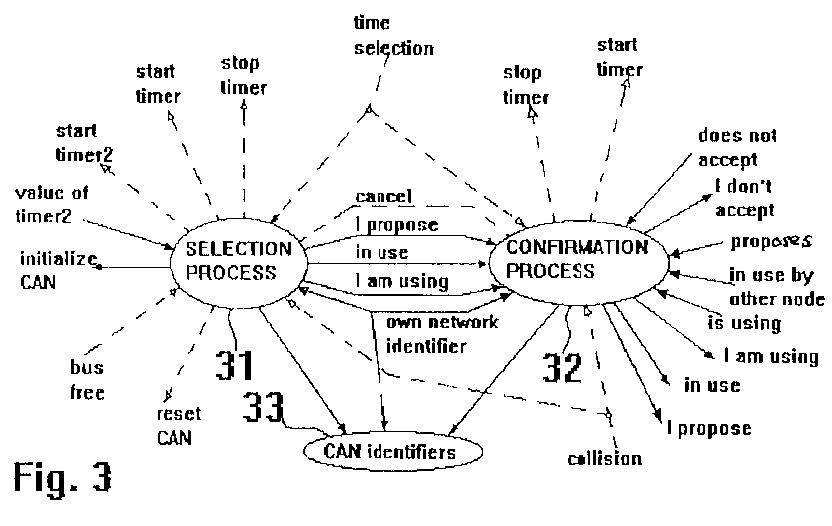

Fig. 3 presents a more detailed illustration of the process of identifier selection in the network and a node. It consists of an identifier selection process 31 and a confirmation process 32. In addition, Fig. 3 comprises a table 33 of the identifiers used in the network, containing the free identifiers as well as those already in use. The messages presented above are linked with these in the manner shown in Fig. 3, as follows: The identifier selection process outputs timer stop and start, start of timer2, network initialization and reset. In addition, the identifier selection process outputs the above-mentioned message levels and its own message identifier to the confirmation process 32. Inputs to the identifier selection process are time-out signal, value of timer2' and bus free, as well as cancel from the confirmation process 32 and collision. Both the selection and confirmation processes are linked with the identifier table 33 so that information flows from the confirmation process to the table as shown by the arrow, and similarly from the selection process to the table and vice versa.

The selection process 31 selects the message identifier using the table and a random number. The random number is also used as a basis for the transfer delay to avoid collisions, and it is also sent into the network to ensure collision in the event of simultaneous transmission with the same identifier.

The confirmation process 32 receives all messages and updates the table with the identifiers proposed and used. It also sends the cancellation messages to the selection process if the same identifier is detected in the network, and it makes sure that table identifiers proposed but not taken in use are set free.

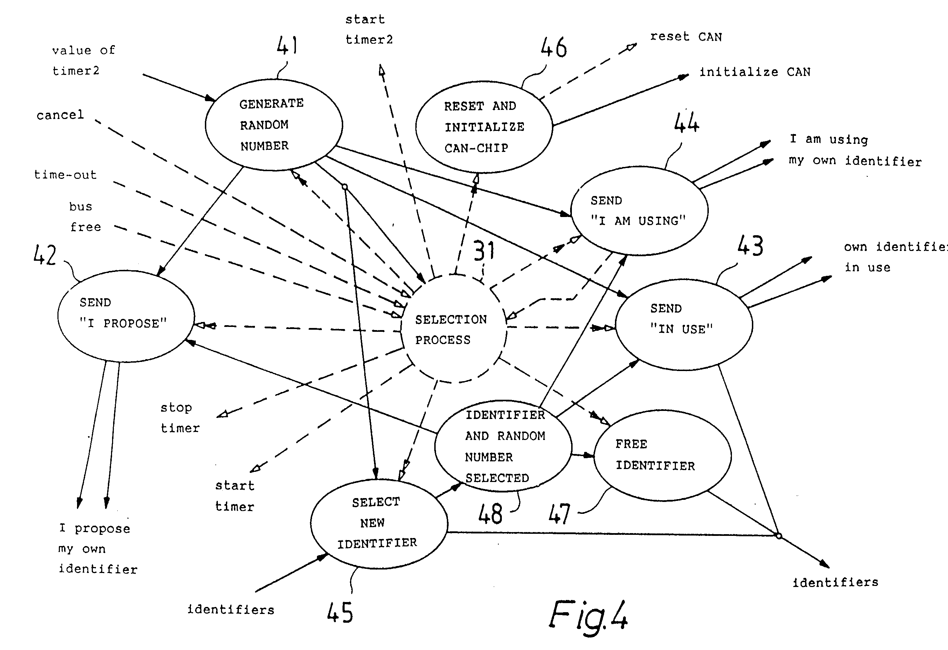

As shown in Fig. 4, the selection process 31 receives the cancel, time-out and bus free messages. It transmits the timer start and stop messages. The value of timer2 is passed to the random number generation 41, which is linked with the selection process, the transmission of the proposals 42-44 and the selection of a new identifier 45. The identifiers are also input to the selection, which is linked with a storage 48 containing the selected identifier and random number. From this storage, the proposal transmission and free identifier 47 functions are controlled. In addition, the selection process controls all the sub-processes 41-47 mentioned, including the reset and initialize CAN chip function 46. Moreover, the selection process receives a control signal from the "I am using" sub-process.

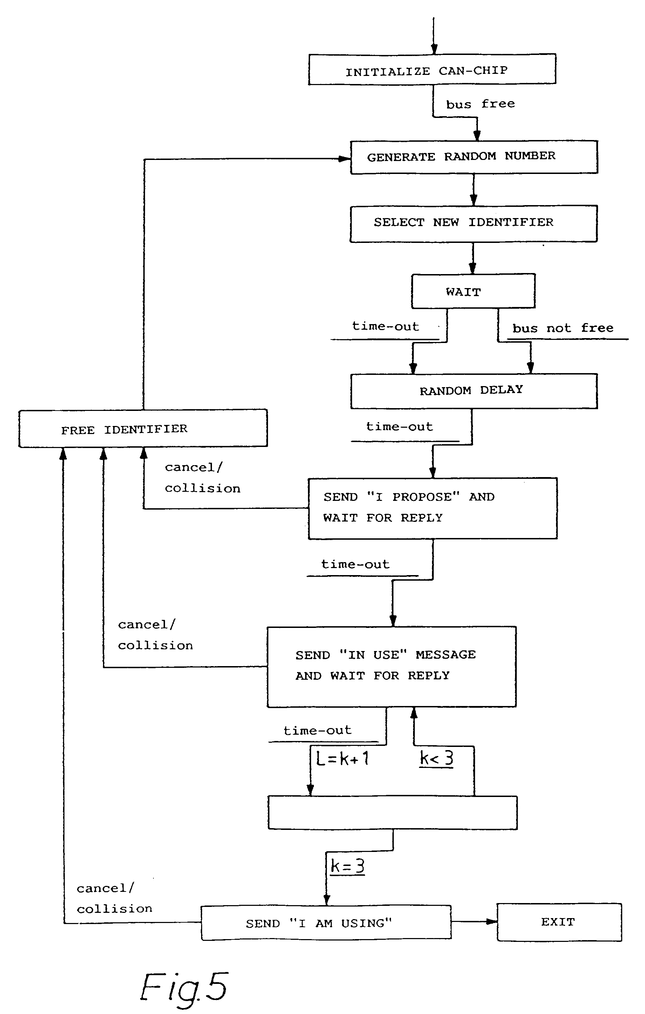

As shown in Fig. 5, the identifier selection process starts by activating the function "reset and initialize CAN chip" of a node connected to the network and starting the the first timer (timer2'). Timer2' may be a free-running counter. When the bus is free (none of the nodes is transmitting anything), a random number is generated by reading the value of timer2.

Next, the process for selecting a new identifier is activated and a new identifier is selected by choosing the one at the address in the identifier storage determined by the random number. If the identifier is free, the node selects it. After this, a second timer is started and the process waits for a message appearing in the network or the start of the watchdog function activated by the second timer. When a message transmitted in the network or the start of time monitoring is detected, a random delay is selected on the basis of the random signal from timer2'.

After the delay, the first message (I propose) is sent into the network. The message contains the identifier, the random number and the "I propose" state. The random number is used to ensure a collision in the event of simultaneous transmission of two messages, because, as stated above, when the identifiers are identical they will not collide whereas the random numbers will. After this, the process waits for a time equal to the delay to see if the identifier is already in use. At this stage, the control quantity k representing the number of "in use"-level messages transmitted is zero.

Upon the lapse of the delay (time-out), none of the nodes has replied that the identifier is already in use in some other node, and the second message (in use) is sent into the network. At the same time, the second timer is started, which, e.g. after 250 ms, can send a time-out signal. The second message is transmitted e.g. three times (k < 3) if none of the other nodes has replied that the identifier in question is reserved. Between the transmissions there is a waiting time of e.g. 250 ms.

Finally, after a fixed delay, the third message (I am using) is transmitted and, after a time-out signal, the program exits the selection process.

If another node has reserved the identifier in question for itself at some stage of message transmission (its proposal is at a higher level) or a collision of messages occurs, then the process returns to the generation of a new random number.

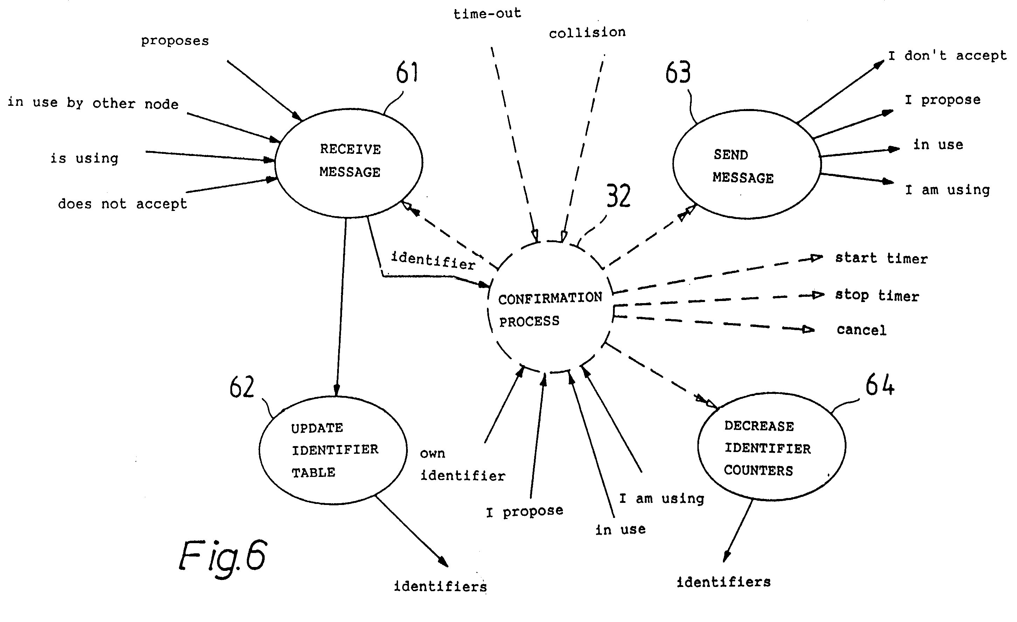

As illustrated by Fig. 6, the confirmation process 32 controls message reception 61, identifier table updates 62, message transmission 63 and decreasing of identifier counters 64. The confirmation process receives the time-out and collision signals as well as the identifier from the message reception. Moreover, the reception process is linked with the transmission and updating processes.

In addition, the confirmation process receives the node's own identifier and own proposals, and outputs the start timer, stop timer and cancel signals.

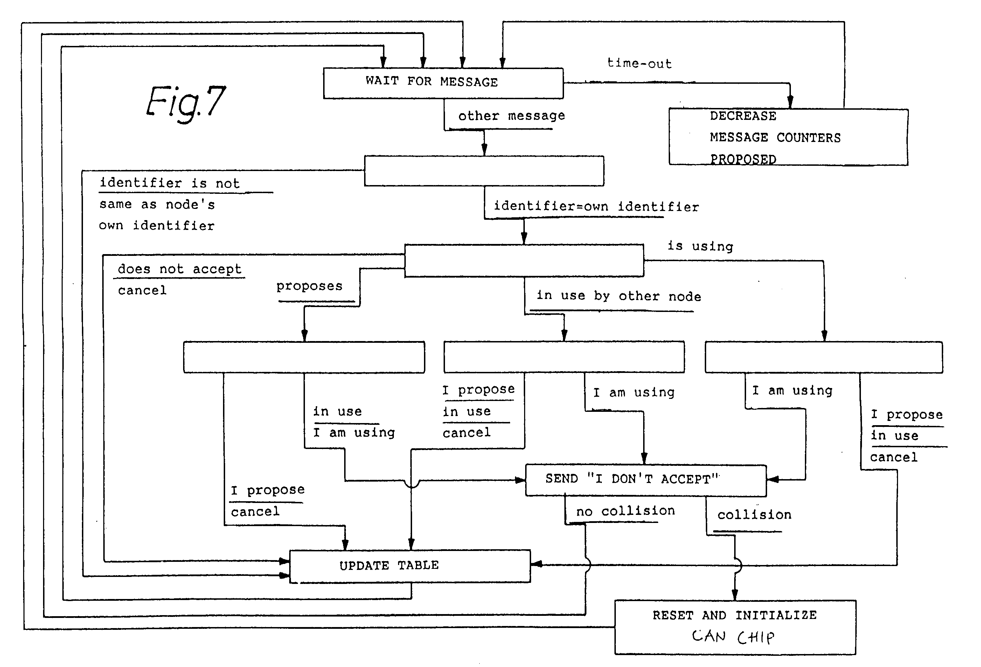

As shown in Fig. 7, the identifier confirmation process first waits for messages arriving from the other nodes. When a message arrives, it is compared to the node's own message identifier. If it differs from the node's own message, the state of the message is stored in a memory. If the identifier is identical with that in the node's own message, the states of the messages are compared to each other. If the arriving message is "does not accept", its state is written into the table and a "cancel" signal is sent to the selection process.

If the arriving message is in the "proposes" state and the node's own message is in the same state, then the node's own message will not be taken into use but given to the other node. Again, if the node's own message is at higher level of proposal, it sends an "I don't accept" message into the network and remains waiting. A corresponding procedure is followed at the other levels, too: if the messages are of the same level, the node gives in, and if its own message is of a higher level, it continues transmitting. Each time the node gives in, it updates the table with the identifier of the other node.

If no collision occurs after the transmission of an "I don't accept" message, the node starts waiting for a new message. If a collision occurs, the CAN chip is reset and initialized before starting waiting for a new message. This is a continuous process. If a time-out occurs while the node is waiting for a message, the identifier counters in the "I propose" and "in use" states are decreased and the node returns again to the waiting state. Fig. 5 and 7 show a line under the condition for exiting the state and the actions to be taken after that are shown beneath the line.

It is obvious to a person skilled in the art that different embodiments of the invention are not restricted to the examples described above, but that they may instead be varied within the scope of the following claims. For example, if the range of message identifiers in the whole CAN network is to be utilized, a node may select several message identifiers for itself by the same procedure.

## Claims

1. Method of assigning message identifiers to messages originating from nodes of a CAN data transmission network in an elevator system such that the message identifiers can be used in the subsequent transmission of corresponding messages,
**characterized** in that
- each node (2 to 6) monitors the data transmissions taking place in the network and stores each message identifier already in use in the network, and that
- whenever a node requires a further identifier, it selects a valid message identifier not yet stored as being already in use in the network, whereby the selection process includes sending a message containing the selected identifier into the network for an availability test and restarting the selection process if another node has already selected the corresponding selected identifier, in this case the identifier selected being marked as the message identifier of said other node.

2. Method according to claim 1, **characterized** in that, when selecting a message identifier, the node makes use of a random number to select an identifier in an identifier table (33) or equivalent.

3. Method according to claim 1 or 2, **characterized** in that, in addition to the identifier, the message sent by the node contains a random number.

4. Method according to any one of the preceding claims, **characterized** in that the message containing the message identifier is sent into the network for an availability test as three messages of different levels, and that each node cancels the identifier transmitted by another node if it is of the same or a lower level than the node's own identifier.

5. Method according to any one of the preceding claims, **characterized** in that a node may select several message identifiers.

6. Method according to any one of the preceding claims, **characterized** in that the node starts normal operation after it has sent a top-level message into the network and the other nodes have accepted it, and that during normal operation the node monitors the transmissions in the network as far its own message identifier is concerned, and, if it finds that another node is trying to take the same identifier into use, it sends a cancellation message containing the state of its own identifier.

## Patentansprüche

1. Verfahren zum Zuteilen von Nachrichtenkennungen zu Nachrichten, die von den Knoten eines CAN-Datenübertragungsnetzwerks in einem Aufzugsystems herrühren, derart, daß die Nachrichtenkennungen bei der nachfolgenden Übermittlung korrespondierender Nachrichten verwendet werden können,
dadurch **gekennzeichnet**,
daß,
- jeder Knoten (2-6) die in dem Netzwerk stattfindenden Datenübertragungen beobachtet bzw. überwacht und jede Nachrichtenkennung speichert, die bereits in dem Netzwerk verwendet wird, und daß
- ein Knoten, immer wenn er eine weitere Kennung anfordert, eine gültige Nachrichtenkennung auswählt, die noch nicht als im Netzwerk in Benutzung befindlich gespeichert ist, wobei der Auswahlprozeß folgende Schritte umfaßt: Eine Nachricht, die die ausgewählte Kennung enthält, wird in das Netzwerk für einen Verfügbarkeitstest abgesendet, und der Auswahlprozeß wird wiederholt, wenn ein anderer Knoten bereits die entsprechende ausgewählte Kennung ausgewählt hat, in welchem Fall die Kennung als Nachrichtenkennung des anderen Knotens markiert wird.

2. Verfahren nach Anspruch 1,
dadurch **gekennzeichnet**,
daß der Knoten beim Auswählen einer Nachrichtenkennung eine Zufallszahl verwendet, um eine Kennung in einer Kennungstabelle (33) oder dergleichen auszuwählen.

3. Verfahren nach Anspruch 1 oder 2,
dadurch **gekennzeichnet**,
daß die von dem Knoten abgesendete Nachricht zusätzlich zu der Kennung eine Zufallszahl enthält.

4. Verfahren nach einem der vorhergehenden Ansprüche,
dadurch **gekennzeichnet**,
daß die die Nachrichtenkennung aufweisende Nachricht für einen Verfügbarkeitstest in Form dreier Nachrichten mit unterschiedlichem Status in das Netzwerk gesendet wird, und daß jeder Knoten die von einem anderen Knoten übermittelte Kennung aufhebt, wenn diese den gleichen oder einen geringeren Status als die eigene Kennung des Knotens aufweist.

5. Verfahren nach einem der vorhergehenden Ansprüche,
dadurch **gekennzeichnet**,
daß ein Knoten mehrere Nachrichtenkennungen auswählen kann.

6. Verfahren nach einem der vorhergehenden Ansprüche,
dadurch **gekennzeichnet**,
daß der Knoten den normalen Betrieb aufnimmt, nachdem er eine Nachricht mit höchstem Status in das Netzwerk gesendet hat und die anderen Knoten diese akzeptiert haben, und daß während des normalen Betriebs der Knoten die Übertragungen in dem Netzwerk überwacht soweit die eigene Nachrichtenkennung betroffen ist, und daß er, wenn er herausfindet, daß ein anderer Knoten versucht, die gleiche Kennung in Benutzung zu nehmen, eine Abbruchmeldung absendet, die den Status der eigenen Kennung enthält.

## Revendications

1. Procédé d'attribution d'identificateurs de message à des messages provenant de noeuds d'un réseau de communication de type CAN dans une installation d'ascenseur, de sorte qu'on peut utiliser les identificateurs de message dans la transmission subséquente de messages correspondants,
caractérisé en ce que :
chaque noeud (2 à 6) surveille les transmissions de données qui ont lieu dans le réseau et stocke chaque identificateur de message déjà en utilisation dans le réseau, et
chaque fois qu'un noeud demande un autre identificateur, il choisit un identificateur de message valable non encore stocké comme étant déjà en utilisation dans le réseau, la procédure de sélection comprenant l'envoi d'un message contenant l'identificateur choisi dans le réseau,pour un test de disponibilité, et le recommencement de la procédure de sélection si un autre noeud a déjà choisi l'identificateur choisi correspondant, et dans ce cas l'identificateur choisi est noté comme étant l'identificateur de message dudit autre noeud.

2. Procédé suivant la revendication 1, caractérisé en ce que, lors de la sélection d'un identificateur de message, le noeud utilise un nombre aléatoire pour choisir un identificateur dans une table d'identificateurs (33) ou un élément équivalent.

3. Procédé suivant la revendication 1 ou 2, caractérisé en ce que, en plus de l'identificateur, le message envoyé par le noeud contient un nombre aléatoire.

4. Procédé suivant une quelconque des revendications précédentes, caractérisé en ce que le message contenant l'identificateur de message est envoyé dans le réseau pour un test de disponibilité sous la forme de trois messages de niveaux différents, et en ce que chaque noeud annule l'identificateur transmis par un autre noeud s'il est de niveau égal ou inférieur à celui du propre identificateur du noeud.

5. Procédé suivant une quelconque des revendications précédentes, caractérisé en ce qu'un noeud peut choisir plusieurs identificateurs de message.

6. Procédé suivant une quelconque des revendications précédentes, caractérisé en ce que le noeud commence un fonctionnement normal après qu'il ait envoyé un message de niveau supérieur dans le réseau et que les autres noeuds l'aient accepté, et en ce que, pendant le fonctionnement normal, le noeud surveille les transmissions dans le réseau en ce qui concerne son propre identificateur de message et, s'il trouve qu'un autre noeud essaie de prendre le même identificateur en utilisation, il envoie un message d'annulation contenant l'état de son propre identificateur.
